**Europäisches Patentamt**

**European Patent Office**

**Office européen des brevets**

(19)

(11) Veröffentlichungsnummer: **0 180 728**
**B1**

(12) **EUROPÄISCHE PATENTSCHRIFT**

(45) Veröffentlichungstag der Patentschrift: **11.04.90**

(51) Int. Cl.⁵: **F 16 L 21/06, F 16 L 23/04**

(21) Anmeldenummer: **85110500.7**

(22) Anmeldetag: **21.08.85**

(54) Abdichtvorrichtung für Verbindungen innenseitig zugänglicher Kammer- oder Rohrelemente.

(30) Priorität: **06.11.84 DE 3440402**

(43) Veröffentlichungstag der Anmeldung:
**14.05.86 Patentblatt 86/20**

(45) Bekanntmachung des Hinweises auf die
Patenterteilung:
**11.04.90 Patentblatt 90/15**

(84) Benannte Vertragsstaaten:
**DE FR GB IT SE**

(56) Entgegenhaltungen:
**AT-B- 108 310**
**CH-A- 136 459**
**DE-A-2 325 910**
**DE-C- 497 070**
**GB-A- 984 740**
**US-A-2 775 472**
**US-A-3 215 166**
**US-A-3 310 329**
**US-A-3 432 175**

(73) Patentinhaber: **Drägerwerk Aktiengesellschaft**
**Moislinger Allee 53-55**
**D-2400 Lübeck 1 (DE)**

(72) Erfinder: **Muchow, Adolf**
**Blocksquerstrasse 1-3**
**D-2400 Lübeck (DE)**
Erfinder: **Steen, Hans-Michael**
**Hohelandstrasse 18**
**D-2400 Lübeck (DE)**
Erfinder: **Oldörp, Peter**
**Berliner Strasse 26**
**D-2407 Sereetz (DE)**

Courier Press, Leamington Spa, England.

**Beschreibung**

Die Erfindung betrifft eine Abdichtvorrichtung für Verbindungen innenseitig zugänglicher Kammer- oder Rohrelemente nach dem Oberbegriff des Anspruchs 1.

Eine Abdichtvorrichtung ist aus der US—A—33 10 329 bekanntgeworden. Dort wird eine in der Ausnehmung einer ersten Flanschstirnfläche aufgenommene Lippendichtung des einen zu verbindenden Elementes gegen die flächige Stirnseite des Flanschendes eines anderen Elementes dichtend angedrückt. Der erforderliche Druck zur gasdichten Abdichtung wird durch ein Verschlußelement hergestellt, welches aus einer die Flanschwulste umfassenden Klammer gebildet wird, welche mittels einer Spannvorrichtung die zu verbindenden Elemente an der Dichtfläche der Lippendichtung fest miteinander verbindet. Ein Auswechslen der Dichtung kann jedoch nur dann erfolgen, wenn die beiden zu verbindenden Elemente voneinander gelöst werden.

Diese bekannte Abdichtvorrichtung ist für den Einbau zur Abdichtung von Druckkammern oder begehbaren Rohrleitungen, welche innerhalb eines Montagegehäuses oder eines Baufundamentes fest installiert sind, nicht einsetzbar, da zum Wechseln der Dichtlippe die gesamte Installation sowie die Kammern bzw. Rohre selbst voneinander getrennt werden müssen, um einen freien Zugang zu der auszuwechselnden Lippendichtung zu erlangen. Dies ist mit erheblichem Aufwand, Betriebszeitverlust für die Kammern bzw. Rohre verbunden.

Insbesondere ist z.B. bei bewohnbaren Druckkammern oder auch Drucksimulationsanlagen ein längerfristiger Aufenthalt von Menschen in diesen Druckkammern notwendig, so daß bei einem eventuell notwendigen Auswechslen der Dichtlippe ein wiederholtes Demontieren und eine anschließende Montage der einzelnen Komponenten unerwünscht ist, da die Bereitschaftszeit solcher Anlagen dadurch erheblich unterbrochen wird.

In der GB—A—984 740 ist eine Dichtung beschrieben, die aus mehreren Dichtelementen besteht. Sie besitzt einen geteilten Haltering mit dreieckigem Querschnitt, auf dessen Schulterflächen Gummipolster als Dichtelemente aufgebracht sind. Diese drücken sich gegen die Dichtflächen der Rohrverbindungsstücke, sobald im Innenraum der Rohre ein Überdruck herrscht. Im drucklosen Zustand ist eine Abdichtung nicht gewährleistet. Die aus verschiedenen Segmenten und Teilringen zusammengestellte Dichtung muß zu einer in sich zusammenhaltenden Einheit verbunden werden. Dies geschieht dadurch, daß alle Dichtungsteile an die Gummipolster z.B. mittels Wärmebehandlung befestigt sind. Die Gummipolster dienen somit auch der Befestigung für die Dichtungsringe. Dies ist schon deshalb notwendig, da sonst der geteilte Haltering aus der Dichtung herausfallen würde, sobald der Innendruck unter einen bestimmten Wert zurückgeht.

Ein Auswechslen der bekannten Dichtung von innerhalb der miteinander zu verbindenden Rohre ist nicht möglich, weil beim Herausreißen des Halteringes die verschiedenen Dichtelemente zerstört werden, sobald die miteinander verbundenen Teile gelöst werden. Die bekannte Dichtung muß daher als Ganzes ausgewechselt werden, wozu die beiden Enden der Rohre voneinander entfernt werden müssen.

Gerade das Lösen der Flansche zum Auswechseln der Dichtung ist aber bei innenseitig zugänglichen, also begehbaren Kammern nicht möglich, bzw. erfordert erhebliche Anstrengungen.

Aus der DE—A—23 25 910 ist eine Rohrkupplung bekanntgeworden, bei welcher zum Wechseln der Dichtung nach dem Lösen von Spannklammern ein mit einer Ringnut versehener Flanschring durch einen zurückschiebbaren Überwurfring freigelegt wird. Jedoch sind zum Wechseln der Dichtung die beiden Flanschringe um ein kurzes Stück auseinanderzurücken. Eine solche bekannte Kupplung ist demnach für die Abdichtung von begehbaren ortsfesten Druckkammern mit den gleichuen aufwendigen Montagearbeiten verbunden.

Der Erfindung liegt die Aufgabe zugrunde, eine Abdichtvorrichtung der genannten Art derart zu verbessern, daß die kammerverbindende Dichtung ausgewechselt werden kann, ohne die Verbindungsstücke selbst lösen zu müssen.

Die Lösung der Aufgabe erfolgt bei der genannten Abdichtvorrichtung durch die kennzeichnenden Merkmale des Anspruchs 1.

Der Vorteil der erfindungsgemäßen Abdichtvorrichtung liegt darin, daß der geteilte Dichtungsträger bei fertig installierten Anlagen ohne Demontage des Kammer- bzw. Rohrsystems sowie der Versorgungsleitungen entfernt werden kann, wonach die defekte Dichtlippe frei zugänglich aus der Ausnehmung entfernt und durch eine neue ersetzt werden kann. Der geteilte Dichtungsträger kann anschließend wieder montiert werden und sorgt gleichzeitig für ein festes Anliegen der Dichtlippe an die flächige Stirnfläche des Gegenstückes.

Je nach Kammergröße reicht ein einfach geteilter Dichtungsträger aus, jedoch ist vorteilhafterweise ein mehrfach geteilter Dichtungsträger vorzusehen, wobei jedes der Teilstücke des Dichtungsträgers zweckmäßigerweise durch eine Schraubverbindung an dem Verbindungsstück befestigt ist.

Zur besserern Montage und Demontage des Dichtungsträgers ist vorgesehen, diesen in längere und kürzere Teilstücke aufzuteilen, wobei die kürzeren Teilstücke vorzugsweise parallel verlaufende oder auch nach außen konvergierende Endflächen aufweisen.

Parallel verlaufende Endflächen ergeben einen gleichmäßigen Spalt zwischen den Teilstücken, die konvergierenden Endflächen dagegen einen im montierten Zustand geringen und bei der Demontage sich vergrößernden und dadurch die Entnahme erleichternden Spalt. Ein Festsetzen der Teilstücke durch Verschmutzungen der Spalte wird vermieden.

In weiterer Ausgestaltung der Erfindung kann vorgesehen sein, daß die flächige Stirnseite des Verbindungsstückes eine qualitativ hochwertige Auflage aufweist.

Ein Ausführungsbeispiel der Erfindung wird anhand der Zeichnung näher beschrieben.

Es zeigen

Figur 1: eine Abdichtvorrichtung im Querschnitt der Verbindung,

Figur 2: einen geteilten Dichtungsträger.

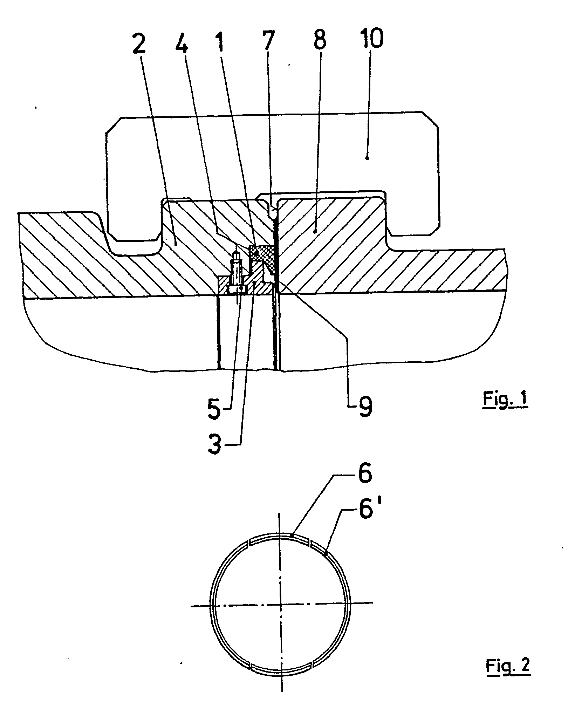

In Figur 1 ist ein Verbindungsstück in Form eines Flanschendes 2 dargestellt, welches eine nach innen offene Ausnehmung 4 aufweist, in die eine Dichtlippe 1 durch den geteilten Dichtungsträger 3 mittels der Schraubverbindung 5 fest angedrückt wird. Die Dichtfläche der Dichtlippe 1 liegt an der Auflage 9 an, welche auf die Stirnfläche 7 eines zweiten Flanschendes 8 aufgebracht ist. Beide Flanschenden werden mit Hilfe der Klammer 10 zusammengehalten.

In Figur 2 ist ein viergeteilter Dichtungsträger mit seinen Teilstücken 6, 6' unterschiedlicher Länge dargestellt.

**Patentansprüche**

1. Abdichtvorrichtung für Verbindungen innenseitig zugänglicher Kammer- oder Rohrelemente, welche endseitig mit Verbindungsstücken (2, 8) versehen sind, deren eines (2) eine stirnseitig umlaufende Ausnehmung (4) und deren anderes (8) eine Stirnfläche aufweist, und die in einer flächigen Trennfuge gegeneinander verspannt sind, wodurch die Dichtfläche einer in der nach innen offenen Ausnehmung (4) des einen Verbindungsstückes (2) aufgenommen, durch einen geteilten Dichtungsträger (3) gestützten Dichtlippe (1) gegen die flächige Stirnfläche des anderen Verbindungsstückes (8) angedrückt ist, dadurch gekennzeichnet, daß der Dichtungsträger (3) lediglich an einem (2) der Verbindungsstücke befestigt, radial nach innen lösbar und von der Dichtlippe (1) trennbar ausgebildet ist, und daß seine Teilstücke (6, 6') mit zueinander parallel oder nach außen konvergierend verlaufenden Endflächen versehen sind.

2. Abdichtvorrichtung nach Anspruch 1, dadurch gekennzeichnet, daß der Dichtungsträger (3) mehrfach geteilt ist.

3. Abdichtvorrichtung nach Anspruch 1 und 2, dadurch gekennzeichnet, daß der Dichtungsträger (3) durch eine Schraubverbindung (5) an dem Verbindungsstück (2) befestigt ist.

4. Abdichtvorrichtung nach Anspruch 2, dadurch gekennzeichnet, daß der Dichtungsträger (3) in zwei gleichlange kürzere Teilstücke (6) und zwei gleichlange längere Teilstücke (6') geteilt ist.

**Revendications**

1. Dispositif d'étanchéité pour des raccords d'éléments de conduits ou de canaux accessibles de l'intérieur, éléments qui sont munis à leurs extrémités de parties de raccordement respectives (2, 8) dont l'une (2) présente un évidement (4) faisant le tour du côté frontal, et dont l'autre (8) présente une face frontale, et qui sont serrées l'une contre l'autre suivant un joint de séparation plan, de sorte que la face d'étanchéité d'une lèvre d'étanchéité (1), lèvre qui est soutenue par un support d'élément d'étanchéité (3) divisé et qui est reçue dans l'évidement (4) ouvert vers l'intérieur de l'une (2) des parties de raccordement, est pressée contre la face frontale plane de l'autre partie de raccordement (8), caractérisé en ce que le support d'élément d'étanchéité (3) est uniquement fixé sur l'une (2) des parties de raccordement, et est réalisé détachable radialement vers l'intérieur et séparable de la lèvre d'étanchéité (1), et en ce que les parties (6, 6') du support d'élément d'étanchéité sont pourvues de faces terminales s'étendant parallèlement entre elles ou en convergence vers l'extérieur.

2. Dispositif d'étanchéité selon la revendication 1, caractérisé en ce que le support d'élément d'étanchéité (3) est divisé en plusieurs parties.

3. Dispositif d'étanchéité selon la revendication 1 ou 2, caractérisé en ce que le support d'élément d'étanchéité (3) est fixé par un assemblage vissé (5) sur la partie de raccordement (2).

4. Dispositif d'étanchéité selon la revendication 2, caractérisé en ce que le support d'élément d'étanchéité (3) est divisé en deux parties plus courtes de même longueur (6) et deux parties plus longues de même longueur (6').

**Claims**

1. Sealing device for connections of chamber or pipe elements which are accessible from the inside and which are provided on the ends with connection pieces (2, 8), one of which (2) has a recess (4), continuous around the interface, and the other one (8) of which has an end face, and which are braced against each other on a two-dimensional separating line, by which the sealing surface of a sealing lip (1) contained in the recess (4), open inwards, of one connection piece (2), and supported by a divided seal carrier (3), is pressed against the two-dimensional end face of the other connection piece (8), characterised in that the seal carrier (3) is constructed so that it is attached simply to one (2) of the connection pieces, and so that it can be separated radially inwards, and so that it can be parted from the sealing lip (1), and in that its partial pieces (6, 6') are provided with end faces which extend so that they are parallel to each other or converge outwards.

2. Sealing device according to claim 1, characterised in that the seal carrier (3) is divided several times.

3. Sealing device according to claim 1 or 2, characterised in that the seal carrier (3) is attached by a screw connection (5) to the connection piece (2).

4. Sealing device according to claim 2, characterised in that the seal carrier (3) is divided into two shorter partial pieces (6) of equal length and two longer partial pieces (6') of equal length.

Fig. 1

Fig. 2